# EUROPEAN PATENT SPECIFICATION

(11) **EP 3 128 884 B1**
(45) Date of publication and mention of the grant of the patent: **11.03.2020**
(21) Application number: 15717745.2
(22) Date of filing: 06.04.2015
(51) Int. Cl.: A47J 37/12, A47J 27/14

(54) **DRAINAGE DEVICE FOR A COOKING APPLIANCE**
DRAINAGEVORRICHTUNG FÜR EINE GARVORRICHTUNG
DISPOSITIF DE DRAINAGE POUR UN APPAREIL DE CUISSON

(30) Priority: 11.04.2014 FR 1453234
(43) Date of publication of application: 15.02.2017
(73) Proprietor: Illinois Tool Works Inc., Glenview, IL 60025 (US)
(72) Inventor: GAULARD, Herve, 39700 Courtefontaine (FR); LUBRINA, Yves, 39800 Chaussenans (FR); BOURGIN, Florent, 25440 Pointvillers (FR)
(74) Representative: HGF Limited
(86) International application number: PCT/US2015/024467
(87) International publication number: WO 2015/157152

(56) References cited:
- DE-A1-102006 031 581
- US-A- 4 506 598
- US-A1- 2007 062 515

## Description

### TECHNICAL FIELD

The present invention relates to a drainage device for a cooking appliance, such as a braising pan or fryer, and also to a cooking appliance comprising this device.

### PRIOR ART

Prior art includes US-A1-2007/062515, US-A-4,506,598 and DE-A1-2006/031581. The recovery of cooking products and the drainage of wastewater is a constant concern and an essential function of professional cooking appliances.

Various means exist for recovering cooking products and channeling wastewater and washing water toward a drain. The following examples present existing and known means and also the advantages and drawbacks thereof.

One of the most conventional means for recovering cooking products consists in tilting the cooking vessel and recovering the cooking products in a container located in front of a pouring spout of the vessel. A gutter located on the ground makes it possible to recover dirty water. Generally, an optional filtering system adapted to the shape of the vessel makes it possible to separate solid products from liquids. This makes it possible, for example, when finishing cooking pasta, to first of all pour the cooking water into the gutter, using the filtering system to hold back the pasta, and then, by removing the filtering system and putting a container in front of the pouring spout, to recover the pasta therein.

Although this system is fairly simple to use and easy to clean, it has a number of constraints. Specifically, it is necessary to provide a suitable and correctly positioned gutter, and also a tilting vessel which is a source of additional costs and design complexity. Moreover, it is necessary to have a number of accessories for practical use. Finally, the tilting time of the vessel is frequently long.

One of the improvements to this system consists in adding to a tilting vessel a connected, low flow-rate, drain outlet for recovering wastewater. This drain outlet located at the bottom of the vessel is generally opened by way of a dedicated control means, which may be electric or manual.

This system makes it possible to do away with the gutter on the ground but has the drawback of having a low flow rate and being difficult to clean. Specifically, the flow cross section is generally very small so as to prevent foodstuffs from passing through. This drain system has to be removed for cleaning or in the event of a blockage.

Another conventional means that is generally used in fixed braising pans consists of a large-diameter (+/- 40 mm) drain tube that is located at the bottom of the cooking vessel and is closed off by a drain plug generally made of Teflon®, this plug being sufficiently tall to be able to be handled manually by the user. The lower end of the drain tube is generally located in a cabinet located beneath the appliance. During use, a recovery tank alternately receives the cooking products or the wastewater depending on the needs of the user. This solution has the advantage of simplicity and a very low cost, but requires constant handling of the recovery tanks and does not make it possible to rinse or clean the vessel with a large quantity of water without changing the tank very frequently or risking flooding in the cabinet.

The invention proposes a simple, effective and economical solution to at least some of the prior art problems.

### SUMMARY OF THE INVENTION

The invention thus proposes a drainage device for a cooking appliance, such as a braising pan or fryer comprising the technical features of independent claim 1.

According to the invention, the collector is movable at least between a first position in which its inlet orifice can communicate with a drain hole of the cooking appliance, and a second position in which this communication is interrupted. In the first position, the collector is able to receive products to be drained, such as wastewater from the cooking appliance, which are then evacuated through the outlet orifice of the collector as far as the sewer for example. In the second position, other products to be drained, such as cooking products, can be evacuated through the drain hole of the cooking appliance and be received in a recovery tank for example. The collector which has been moved into the second position thus does not impede the drainage of the cooking products. The invention thus makes it possible to carry out drainage in a practical and economical manner for example by recovering the cooking products in a tank and sending the wastewater directly to the sewer. It is thus no longer necessary to equip the cooking appliance with a tilting vessel as in the prior art. The vessel may be fixed, thereby allowing an economical structure that is easily integrable into a professional kitchen range for example. This solution also has the advantage of not requiring a gutter on the ground in front of the cooking appliance.

The collector may have the overall shape of a box.

The means for moving and guiding may be designed to allow the collector to be moved at least in a plane approximately perpendicular to the axis of said inlet orifice.

The collector may be carried by an arm of which one end is designed to be articulated about an axis of movement of the collector. This axis of movement is preferably approximately parallel to the axis of said inlet orifice.

The outlet orifice of the collector may be connected to a flexible drain hose.

The device may comprise a handle for moving the collector.

The invention also relates to a cooking appliance, such as a braising pan or fryer, having at least one cooking wall having a drain hole, and a drainage device, characterized in that it comprises a collector having an inlet orifice and an outlet orifice that are connected together by a collection chamber, and in that the device also comprises means for moving and guiding the collector, said means being designed to engage with said appliance in order to allow the collector to be moved, at least about an axis of movement approximately parallel to the axis of said drain hole, between at least one first position in which its inlet orifice communicates with the drain hole and a second position in which these orifices do not communicate with one another.

The invention furthermore relates to a cooking appliance, such as a braising pan or fryer, having at least one cooking wall having a drain hole, characterized in that it also comprises a device as claimed in one of the preceding claims, the collector being movable at least between a first position in which its inlet orifice communicates with the drain hole and a second position in which these orifices do not communicate with one another.

The or each appliance may comprise all or some of the above-described features of the device.

The cooking wall may be a bottom wall of a cooking vessel, which is preferably a fixed or non-tilting cooking vessel.

An annular seal is preferably fitted at the drain hole and comprises a bearing end for bearing against the peripheral edge of the inlet orifice of the collector.

The collector may be located under the cooking wall and be connected by connecting means to a handle which is located at the front of the cooking appliance. The connecting means preferably pass through a guide slot in a front wall of the cooking appliance. The slot may comprise an approximately horizontal rectilinear part connected at each of its ends to an approximately vertical part.

The appliance may comprise return means that urge the collector into said first position and/or into said second position.

The appliance may have at least one removable tank disposed beneath the cooktop and designed to recover drained products when the collector is in said second position.

### DESCRIPTION OF THE FIGURES

The invention will be better understood and further details, features and advantages of the invention will become apparent from reading the following description that is given by way of nonlimiting example with reference to the appended drawings, in which:
figures 1 and 2 are schematic perspective views of a cooking appliance according to the invention, this appliance having at least one removable tank which is in the stowed position in figure 1 and the extracted position in figure 2;
figures 3 and 4 are schematic perspective and sectional views of the cooking appliance from figures 1 and 2, the removable tank being in the stowed position in figure 3 and in the extracted position in figure 4;
figures 5 and 6 are schematic perspective views of an upper part of the appliance from figures 1 and 2;
figures 7 and 8 are schematic views of the lower face of the upper part of the appliance from figures 1 and 2, and show two different positions of a collector of a drainage device according to the invention;
figures 9 and 10 are schematic perspective views of a drainage device according to the invention;
figure 11 is a partial schematic perspective and sectional view on a larger scale of the drainage device from figures 9 and 10 and of a drain hole of a cooking wall of the cooking appliance from figures 1 and 2;
figure 12 is a partial schematic view of the front face of a variant embodiment of a cooking appliance according to the invention; and
figures 13 and 14 are schematic side views of the cooking appliance from figure 12, showing two different positions of the recovery tanks of this appliance.

### DETAILED DESCRIPTION

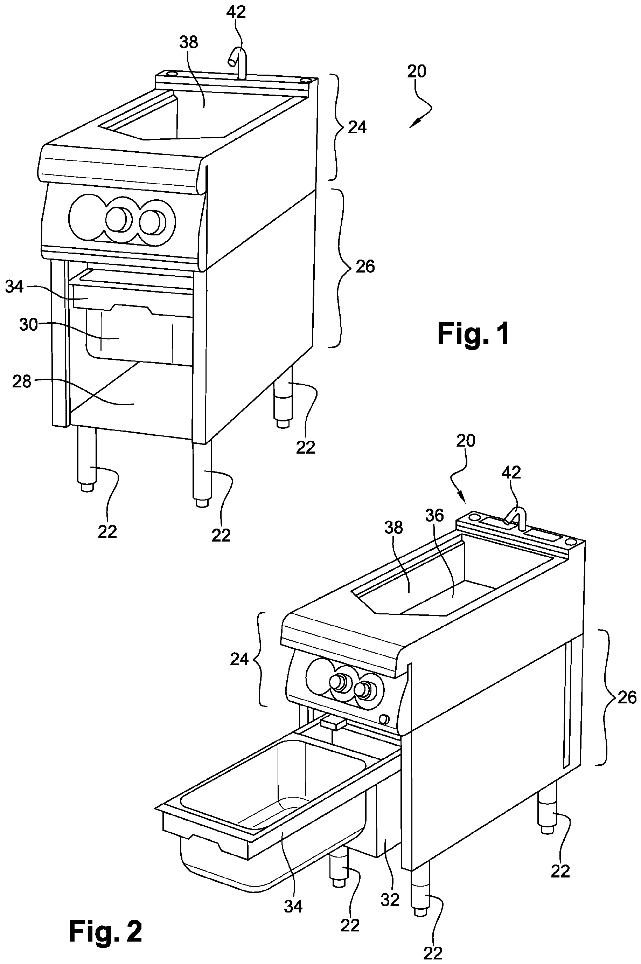

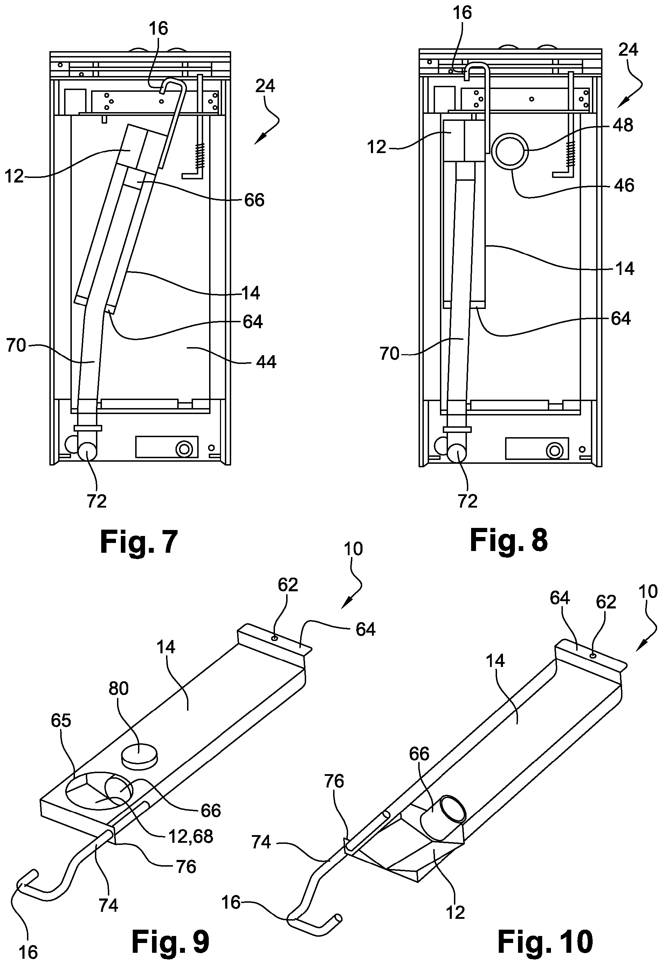

Figures 1 to 11 show particular exemplary embodiments of a drainage device 10 according to the invention (visible in particular in figures 9 and 10) and of a cooking appliance 20 having such a device.

Figures 1 and 2 show the cooking appliance 20 as a whole, the cooking appliance in this case being a braising pan or fryer.

Typically, this type of appliance has a parallelepipedal overall shape and has an approximately vertical front face (that is accessible to a user) and an approximately vertical rear face, approximately vertical side faces that are perpendicular to the front and rear faces, and an approximately horizontal upper face (that is also accessible to a user) and an approximately horizontal lower face. As in the example shown, in order to set the upper face of the appliance 20 at a given height and to make it easier to clean the ground under the appliance, the appliance 20 may be equipped with height-adjustable feet 22, resting on the ground, which are connected to the lower face of the appliance.

The appliance 20 has essentially two parts, an upper part 24 and a lower part 26. The lower part 26 of the appliance comprises two side walls which define between one another a space 28 for housing at least one recovery tank 30, 32. The space 28 opens onto the front face of the appliance 20 such that the tanks 30, 32 are accessible from the front of the appliance.

The tanks 30, 32 are in this case removable. They are fitted one behind the other on a sliding frame 34, for example by way of a system of slide rails. The tanks 30, 32 are in this case movable in a horizontal plane and in a direction approximately perpendicular to the front face of the appliance.

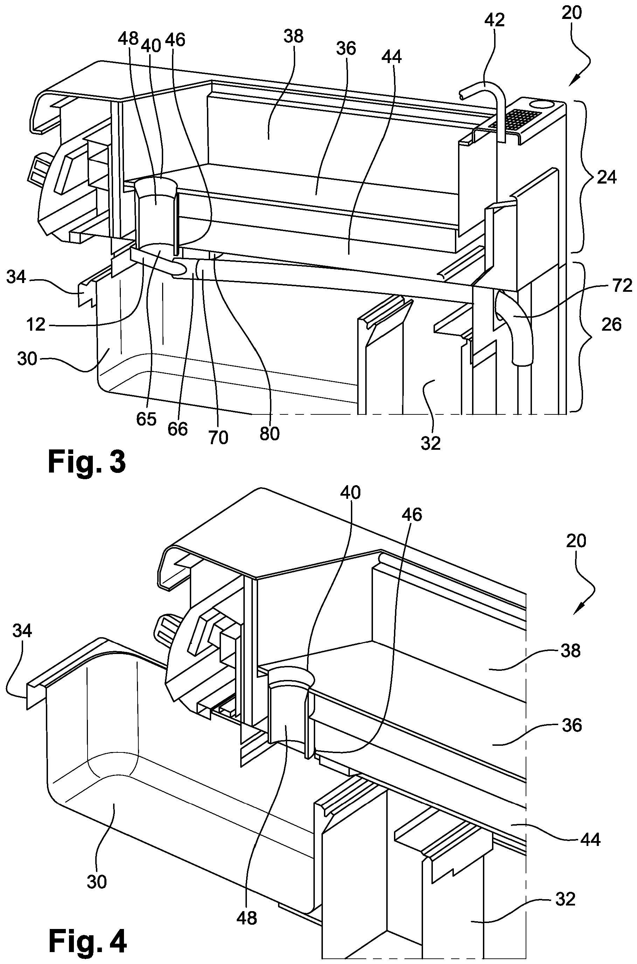

The tanks 30, 32 can be moved from a stowed position, shown in figures 1 and 3, in which they are both housed in the space 28, to an extracted position, shown in figures 2 and 4, in which they are both extracted from the space 28. They can be moved into any intermediate position between the two abovementioned extreme positions.

The tank 30, located at the front, can be a tank for recovering cooking products (such as a GN tank). The tank 32, located at the rear, can be a tank for collecting cooking oil, in this case having a smaller volume than the tank 30.

The upper part 24 of the appliance 20 comprises means for heating and for regulating the heating of a cooking wall 36, which is in this case an approximately horizontal lower wall of a cooking vessel 38.

The cooking vessel 38 has in this case an approximately vertical front wall and rear wall and approximately vertical side walls. These walls extend upward from the cooking wall 36 and define with the latter a volume intended to contain products to be cooked. The front wall forms in this case a dihedron, the apex of which is oriented toward the front of the appliance 20.

The vessel 38 is in this case of the fixed type, that is to say it is fitted in a fixed manner on the appliance 20 and is not intended to be removed or tilted in order to be drained.

The cooking wall 36 preferably comprises a single drain hole 40. This limits cleaning and simplifies the cooking vessel 38 compared with a separate drain for the product and a drain for washing or cooking water. The hole 40 is in this case located in the vicinity of the front end of the cooking wall 36, approximately in the middle of the latter. It can be seen in figures 3 and 4 that the vertical median plane of the appliance 20 passing from the front to the rear in the middle of the vessel 38 passes through the hole 40 and through the apex of the abovementioned dihedron.

The means for heating and regulating the heating of the appliance 20 are not part of the invention and will not be described in the present application. The regulating means are located on the front face of the appliance 20 and are accessible to the user. The heating means are located beneath the cooking wall 36.

The upper part 24 of the appliance 20 can be connected by an appropriate means 42 to a general water inlet, with a view to using water for cooking the products and for cleaning the vessel 38 after it has been used.

The upper part 24 of the appliance 20 furthermore comprises an approximately horizontal lower wall 44 which extends under the cooking wall 36 and at a distance therefrom. This wall 44 may be made of ferromagnetic material for reasons which will be explained later on in the following text.

The wall 44 comprises a hole 46 for draining the vessel 38, which is aligned vertically with the hole 40 in the vessel 38. The holes 40, 46 are connected together by a cylindrical tube 48 which may have a diameter greater than or equal to 30 or 40 mm, for example 60 mm.

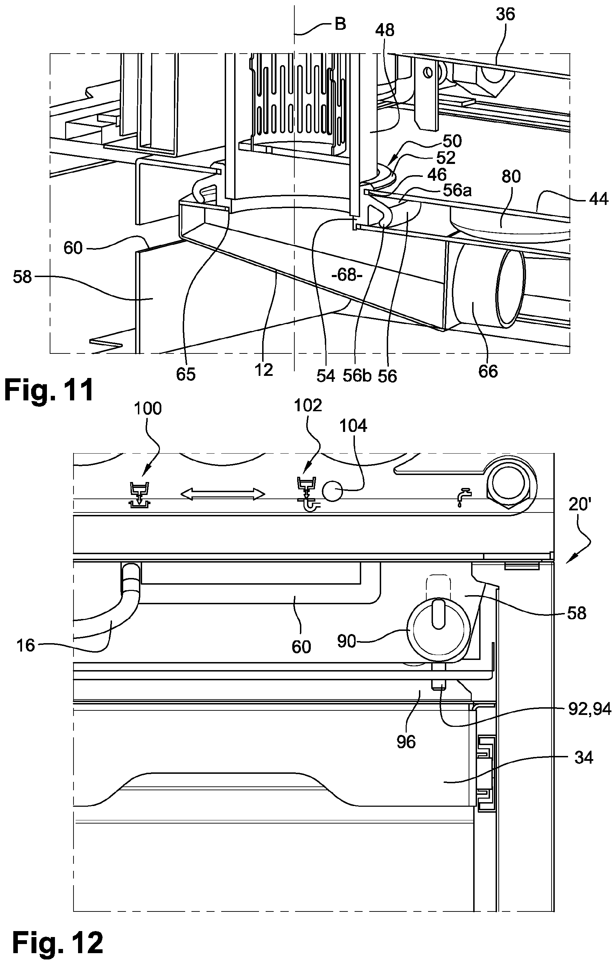

The upper end of the tube 48 is fixed beneath the cooktop 36 and its lower end can pass through the hole 46 and project from the inner face of the wall 44, as is more easily visible in figure 11.

An annular seal 50 may be fitted between the lower end of the tube 48 and the peripheral edge of the hole 46. In the example shown, the seal 50 comprises a cylindrical tubular part which surrounds the lower end of the tube 48 and which comprises at its upper end an outer annular lip 52 for bearing axially (along the axis B of the tube) against the upper face of the wall 44. The tubular part of the seal 50 comprises at its lower end an inner annular lip 54 for bearing axially against the lower free end of the tube. The tubular part of the seal 50 furthermore comprises an outer annular collar 56 which extends beneath the wall 44 and has in this case an approximately L- or V-shaped cross section. This collar 56 comprises an upper annular part 56a that extends downward and radially toward the outside (with respect to the axis B of the tube) from the tubular part of the seal 50 and is connected by its lower outer periphery to a lower annular part 56b that extends downward and radially toward the inside. This collar 56 is axially compressible, its lower free end forming bearing means.

The lower wall 44 has an L-shaped cross section and comprises at its front end an approximately vertical lip 58 which extends downward and delimits a part of the front face of the appliance 20. This lip 58 comprises a guide slot 60, as will be described in more detail in the following text.

According to the invention the cooking appliance 20 is equipped with a removable drainage device 10 which makes it possible in a reliable and economical manner to drain the vessel 38 either by evacuating all or part of its contents to the sewer, or by evacuating it toward at least one of the tanks 28, 30.

Figures 9 and 10 show an embodiment of the drainage device 10 according to the invention.

In the example shown, the device 10 comprises essentially three parts: a collector 12, an arm 14 for supporting and moving the collector 12, and an operating handle 16.

The arm 14 has a rectilinear elongate shape and comprises a rear longitudinal end and a front longitudinal end.

In the example shown, the arm 14 is formed by a folded metal sheet which has an elongate shape and of which the longitudinal edges are folded downward, the transverse front edge is folded downward and the rear transverse edge is folded upward.

At its rear longitudinal end, the arm 14 comprises an orifice 62, the axis of which is oriented approximately vertically. The orifice 62 is in this case formed in the middle of an approximately horizontal rear transverse lip 64 of the arm 14. This lip 64 is obtained by bending the abovementioned rear transverse edge of the metal sheet of the arm 14.

The orifice 62 in the arm 14 is passed through by an approximately vertical articulation pin fixed to the lower wall 44, such that the arm 14 can be moved at least in rotation with respect to this pin in an approximately horizontal plane. As will be seen below, the arm 14 can also be moved, with a smaller amplitude, in approximately vertical planes.

In the fitted position, the rear lip 64 of the arm 14 can be applied to the lower face of the wall 44 and can slide over this face during rotational movements of the arm about the abovementioned pin.

As is visible in figures 7 and 8, the arm 14 is movable in rotation from a first position (figure 7) to a second position (figure 8). The angular travel of the arm 14 between the two positions is in this case around 30°.

The front longitudinal end of the arm 14 carries the handle 16 and the collector 12.

The collector 12 has the overall shape of a box or cup which is approximately parallelepipedal and comprises two orifices, an inlet orifice 65 and an outlet orifice 66, respectively, which are connected together by a collection chamber 68. The axis of the inlet orifice 65 is oriented approximately vertically. The inlet orifice 65 is formed in this case by an orifice in the metal sheet of the arm 14. The axis of the outlet orifice 66 is oriented approximately horizontally. It is located at the rear of the collector 12 and is connected to a front end of a flexible connecting hose 70, the rear end of which is connected to one end of an angled connector 72. The other end of the connector 72 is intended to be connected, for example by another flexible hose, to the sewer.

The collector 12 comprises a front wall and a rear wall that are approximately parallel, an upper wall which is formed by a part of the metal sheet of the arm 14 and is thus approximately horizontal, and a lower wall which is inclined downward from the front to the rear, as is visible in figure 11. These walls define between one another the collection chamber 68 of the collector 12. The lower wall of the collector 12 is in this case in the form of a dihedron of which the apex is oriented downward. This wall is arranged such that the lowest point of the collection chamber 68 is located just in front of the outlet orifice 66 of the collector.

The assembly composed of the collector 12, the hose 70 and the connector 72 may have a slope that is intended to avoid drained products, such as water, being held back and to make it easier to evacuate them.

The handle 16 is in this case formed by a U-shaped front part of a rigid metal rod, such as a steel wire. This rod comprises an approximately rectilinear rear part 74 for connecting the handle 16 to the front end of the arm 14. In the example shown, the rear part 74 of the rod passes through an orifice in a lateral extension 76 of the front transverse edge of the arm 14 and is fixed to this extension.

The rear part 74 of the rod passes through the slot 60 in the lip 58 of the wall 44, this slot serving as a guide during the movement of the arm 14, this movement being carried out directly by the user by means of the handle 16. The rod (and in particular the rear part 74 thereof) has a diameter less than the width of the slot 60.

The slot 60 has an overall U-shape and comprises an approximately horizontal rectilinear part of which the length defines the angular travel of the arm 14. In figure 7, the rear part 74 of the rod is located at a (right-hand) end of the slot 60 and, in figure 8, it is located at the opposite (left-hand) end of the slot 60.

In order to avoid unintentional movement of the arm 14 in the slot 60, the latter comprises, at each of its ends, a vertical part in which the rear part 74 of the rod can be inserted, thereby blocking the arm 14 in the corresponding position. A movement of the rod in a vertical end part of the slot 60 brings about a movement of the collector 12 and of the arm 14 in an approximately vertical plane.

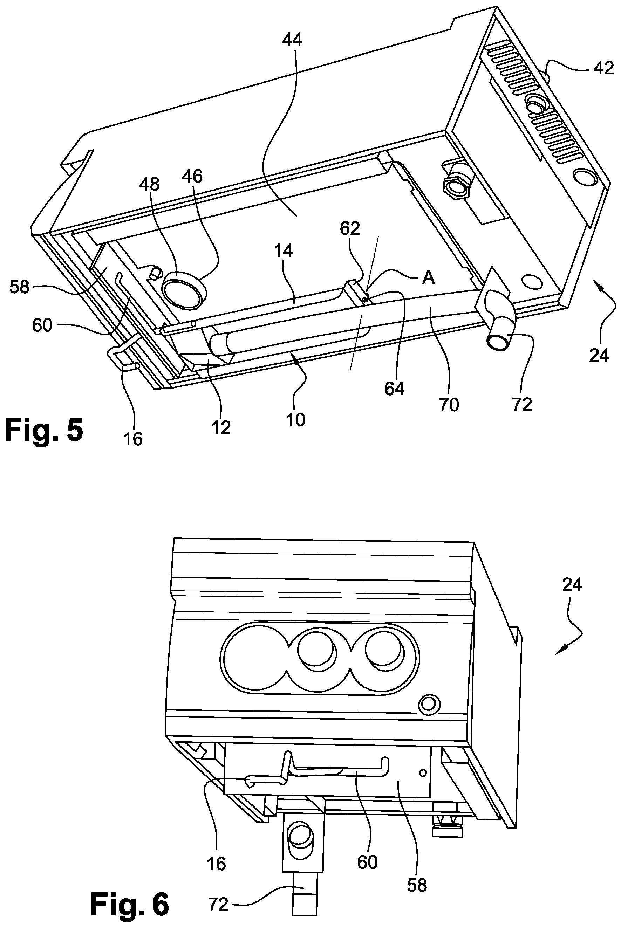

The drainage device 10 is advantageously equipped with return means that urge the arm 14 against the lower wall 44 and thus urge the rear part 74 of the rod into the upper end of a vertical part of the slot 60 when this part 74 is located in the corresponding longitudinal end of the horizontal part of the slot 60. Thus, when the rod is in the position shown in figure 7 (and also in figures 3, 4 and 11), it is urged into the end of the right-hand vertical part of the slot 60 and, when the rod is in the position shown in figure 8 (and also in figures 5 and 6), it is urged into the end of the left-hand vertical part of the slot 60.

In the example shown, the return means comprise a magnet 80 that is carried by the arm 14 and engages directly with the lower part 44 which is made of ferromagnetic material. In a variant, the return means could comprise a spring-type system.

In the position shown in figures 5, 6 and 8, it can be seen that the collector 12 is at a distance from the lower end of the drainage tube 48. Thus, the products contained in the cooking vessel 38 can be evacuated through the tube 48 to one of the tanks 30, 32. When cooking products such as pasta are intended to be recovered, the tanks 30, 32 are arranged in the position shown in figures 1 and 3 such that the cooking products exiting the tube 48 drop directly into the tank 30. When oil is intended to be recovered, the tanks 30, 32 are arranged in the position shown in figure 2, such that the oil can flow from the tube 48 and drop directly into the tank 32.

In the position shown in figures 3, 4, 7 and 11, it can be seen that the collector 12 is aligned vertically with the drainage tube 48 such that products such as cooking water contained in the cooking vessel 38 can be evacuated to the sewer by way of the collector 12 and the hose 70. In this position, as described above, the arm 14 and the collector 12 are urged by the magnet 80 toward the wall 44 and the peripheral edge of the inlet orifice 65 of the collector 12 bears axially (in a direction parallel to the axis B) against the lower end of the seal 50 (in this case against the inner annular lip 54 thereof). The return force exerted by the magnet 80 is sufficient to axially compress the seal 50 and provide a good seal for the fluidic connection between the drainage tube 48 and the collector 12. The collar 56 of the seal bears by way of its lower end against the arm 14 and is axially compressed, thereby ensuring a second seal around the inlet orifice 65. As a result of the inclination of the lower wall of the collector 12, the products which flow from the tube 48 into the collector are carried to the outlet orifice 66 of the collector by gravity in order to then flow to the sewer.

The particular shape of the slot 60 makes it possible to move the collector 12 horizontally without touching the seal 50, and thus without risking damaging the latter by friction. The flexibility of the hose 70 allows it to follow the various movements of the collector 12 about the axis A.

The various components of the drainage device 10 can be made of metal material(s) and be joined together by welding or brazing.

The cooking appliance 20 may be used for example in the following way.

The position of the collector 12 that is shown in figures 3, 4, 7 and 11 is known as the drainage position. This position makes it possible to evacuate the contents of the vessel 38 toward the sewer. The position of the collector 12 that is shown in figures 5, 6 and 8 is known as the recovery position. This position makes it possible to evacuate the contents of the vessel 38 into a tank 30, 32 located beneath the vessel 38.

In the drainage position, the inlet orifice 65 of the collector 12 is aligned with the drainage tube 48 of the vessel 38. The products present in the vessel 38 can flow through the drainage tube 48 into the collector 12 and then into the hose 70 and finally into the connector 72 as far as the sewer. The seal 50 provides the seal between the tube 48 and the collector 12. This position is mainly used to evacuate cooking water and washing water.

When the user wishes to change the position of the collector 12 in order to pass into the recovery position, he lowers the handle 16 of the device 10 and moves it (in the example shown) toward the left in order to bring it to the left-hand end of the slot 60. The magnetic return means 80 then carry the handle 16 toward the top of the slot 60 and consequently the collector 12.

In this position, the collector 12 is offset toward the left-hand side of the appliance, freeing up the space located beneath the drainage tube 48. The user can empty the vessel 48 into the tank 30 located in the space 28. This position is generally used to recover foodstuffs (meat in sauce, vegetables, starchy foods, etc.). This position also serves to recover the oil after frying. In this case, the tank 32 is positioned under the drainage tube 48.

Since the drainage device 10 is secured in this case to a wall 44 of the appliance 10, disassembly and maintenance of the device can be carried out by disconnecting this wall of the appliance 20 with the aid of screws for example and by disconnecting the hose 70 from the connector 72.

The drainage tube 48 which comprises a smooth inner cylindrical surface having a large diameter is easy to clean manually without being removed.

Figures 12 to 14 show a variant embodiment of a cooking appliance 20' according to the invention, this appliance 20' having all of the features described in the above text, in particular as far as the drainage device 10 is concerned.

The appliance 20' also comprises a retractable system for easily positioning the opening in the tank 32 for recovering oil opposite the drainage tube 48 so as to make it easier to align them in order to recover oil from the cooking vessel.

The appliance 20' comprises, on its front face, a rotary button 90 which is connected to a front end of an L-shaped rod 92. The rear end 94 of the rod 92, opposite the button 90, is bent through about 90°. The button 90 is in this case carried by the abovementioned front lip 58 of the appliance 20' (which also has the slot 60), the rod 92 passing through an orifice in this lip 58.

The button 90 is movable in rotation about an approximately horizontal axis between a first position (represented by solid lines in figures 12 to 14) in which the rear end 94 of the rod 92 is oriented vertically downward, and a second position (represented by dashed lines in figure 12) in which the rear end 94 is oriented vertically upward. The button 90 can be urged into its first position by a spring-type return system.

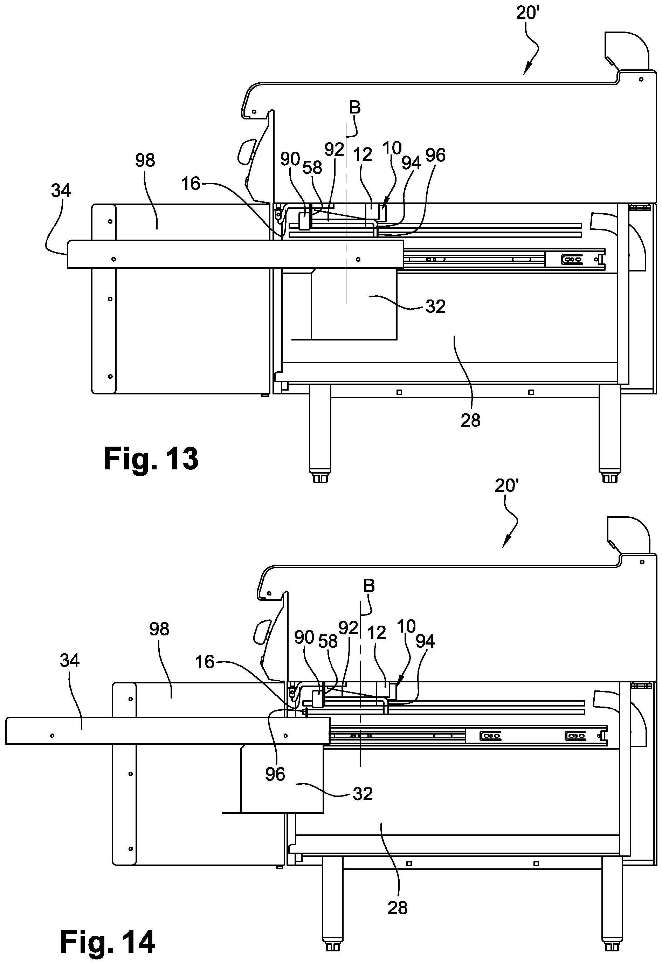

As is visible in figures 13 and 14, the rear end 94 of the rod 92 is located at the downstream end of the collector 12. In other words, the rear ends of the rod 92 and of the collector 12 are located approximately in one and the same approximately vertical plane parallel to the front face of the appliance 20'.

The rear end 94 of the rod 92 has a length such that it forms a stop means for an element carried by the sliding frame 34 or the tank for recovering oil 32. In the example shown, the sliding frame 34 has a vertical lip 96 that is intended to bear against the end 94 of the rod 92 in a direction approximately perpendicular to the front face of the appliance 20' in order to limit the travel of the frame 34 when it is extracted from the space 28 in the appliance 20'.

The lip 96 is positioned on the frame 34 such that, when it bears against the end 94 of the rod 92 (that is to say when it is located approximately in the abovementioned vertical plane), the tank 32 is aligned vertically with the drainage tube of axis B of the appliance 20' such that the oil pours from the cooking vessel into the tank 32.

It will thus be understood that, when the tanks 30, 32 are in the stowed position (visible in figure 1 for example), the drainage of the cooking vessel without the aid of the drainage device 10 will bring about the evacuation of the products contained in the vessel toward the tank 30. The user only has to pull the sliding frame 34 forward until the lip 96 comes into abutment against the rod 92 in order to recover the oil contained in the vessel in the tank 32 (figure 13). When the user wishes to have access to the tank 32, or else to the tank 30, it is sufficient for him to turn the button 90 (through at least a quarter turn as shown in figures 8 and 9, or a half turn as in the case shown by way of dashed lines in figure 12), in order to be able to move the sliding frame 34 further forward.

As is visible in figures 13 and 14, the appliance 20' can be equipped with a front door 98 for closing the space 28.

The appliance 20' can also comprise means for indicating the position of the drainage device 10 and in particular of the collector 12. Figure 12 shows that the front face of the appliance 20' can comprise relevant schematic drawings 100, 102. The drawing 100 indicates to the user that the collector 12 is in the abovementioned recovery position and the drawing 102 indicates that the collector is in the position of draining to the sewer. The appliance 20' can comprise at least one indicator lamp 104 for indicating the position of the collector 12 to the user, in this case located next to the drawing 102.

Generally, however it is used (drainage into a tank or to the sewer), the invention provides more rapid drainage than the existing systems. In one particular embodiment of the invention, the drainage of 15 L of products into a recovery tank takes 10 s (10 seconds) with the invention as opposed to 38 s for a conventional vessel which is tilted in order to be emptied (19 s) and which is then returned to its horizontal position (19 s). The drainage of 15 L of products to the sewer takes 20 s with the invention as opposed to 35 s for a conventional vessel.

If the quantity of liquid or foodstuffs to be evacuated is reduced, the difference between the invention and the existing systems is even more evident, with the tilting time remaining identical for the existing appliances. The drainage of 5 L of products into a recovery tank takes 4 s with the invention as opposed to 38 s for a conventional vessel (19s + 19s).

The word approximately is used in connection with various terms above, including the terms perpendicular, parallel, horizontal and vertical. Alternatively, the word substantially may be used in connection with any of the various terms, including the terms perpendicular, parallel, horizontal or vertical and in accordance with its plain and ordinary meaning to those of ordinary skill in the art.

## Claims

1. A cooking appliance (20), such as a braising pan or fryer, having at least one cooking wall (36) having a drain hole (40), and a drainage device (10), wherein it comprises a collector (12) having an inlet orifice (65) and an outlet orifice (66) that are connected together by a collection chamber (68), and wherein the device also comprises means (16, 62, 74) for moving and guiding the collector, said means being designed to engage with said appliance in order to allow the collector to be moved, at least about an axis of movement (A) which is approximately parallel to the axis of said inlet orifice (65), between at least a first position in which its inlet orifice (65) communicates with the drain hole (40) and a second position in which these orifices do not communicate with one another.

2. The appliance (20) as claimed in claim 1, **characterized in that** the collector (12) has the overall shape of a box.

3. The appliance (20) as claimed in claim 1 or 2, **characterized in that** the means (16, 62, 74) for moving and guiding are designed to allow the collector to be moved at least in a plane approximately perpendicular to the axis of said inlet orifice (65).

4. The appliance (20) as claimed in one of the preceding claims, **characterized in that** the collector (12) is carried by an arm (14) of which one end is designed to be articulated about said axis (A) of movement of the collector.

5. The appliance (20) as claimed in one of the preceding claims, **characterized in that** the outlet orifice (66) of the collector (12) is connected to a flexible drain hose (70).

6. The appliance (20) as claimed in one of the preceding claims, **characterized in that** it comprises a handle (16) for moving the collector (12).

7. The appliance (20) as claimed in one of the preceding claims, **characterized in that** the cooking wall (36) is a bottom wall of a cooking vessel (38), which is preferably a fixed or non-tilting cooking vessel.

8. The appliance (20) as claimed in one of the preceding claims, **characterized in that** an annular seal (50) is fitted at the drain hole (40) and comprises a bearing end for bearing against the peripheral edge of the inlet orifice (65) of the collector (12).

9. The appliance (20) as claimed in one of preceding claims, **characterized in that** the collector (12) is located under the cooking wall (36) and is connected by connecting means (74) to a handle (16) which is located at the front of the cooking appliance.

10. The appliance (20) as claimed in claim 9, **characterized in that** the connecting means (74) pass through a guide slot (60) in a front wall of the cooking appliance.

11. The appliance (20) as claimed in claim 10, **characterized in that** the slot (60) comprises an approximately horizontal rectilinear part connected at each of its ends to an approximately vertical part.

12. The appliance (20) as claimed in one of preceding claims, **characterized in that** it comprises return means (80) that urge the collector (12) into said first position and/or into said second position.

13. The appliance (20) as claimed in one of claims 8 to 12, **characterized in that** it has at least one removable tank (30, 32) disposed beneath the cooktop (36) and designed to recover drained products when the collector (12) is in said second position.

## Patentansprüche

1. Gargerät (20), zum Beispiel ein Multibräter oder eine Fritteuse, das mindestens eine Garwand (36) mit einer Ablauföffnung (40) und einer Ablaufvorrichtung (10) aufweist, wobei das Gerät eine Sammeleinheit (12) mit einer Einlassöffnung (65) und einer Auslassöffnung (66), die über einen Sammelbehälter (68) miteinander verbunden sind, umfasst, und wobei das Gerät außerdem Einrichtungen (16, 62, 74) zum Bewegen und Führen der Sammeleinheit umfasst, wobei die Einrichtungen dazu ausgestaltet sind, in das Gerät einzugreifen, damit die Sammeleinheit zumindest um eine Bewegungsachse (A), die in etwa parallel zur Achse der Einlassöffnung (65) verläuft, zwischen zumindest einer ersten Position, in der die Einlassöffnung (65) mit der Abflussöffnung (40) verbunden ist, und einer zweiten Position, in der diese Öffnungen nicht miteinander verbunden sind, bewegt werden kann.

2. Gerät (20) nach Anspruch 1, **dadurch gekennzeichnet, dass** die Sammeleinheit (12) insgesamt kastenförmig ist.

3. Gerät (20) nach Anspruch 1 oder 2, **dadurch gekennzeichnet, dass** die Einrichtungen (16, 62, 74) zum Bewegen und Führen dazu ausgestaltet sind, die Bewegung der Sammeleinheit zumindest in einer in etwa senkrecht zur Achse der Einlassöffnung (65) verlaufenden Ebene zu ermöglichen.

4. Gerät (20) nach einem der vorstehenden Ansprüche, **dadurch gekennzeichnet, dass** die Sammeleinheit (12) von einem Arm (14) getragen wird, dessen eines Ende dazu ausgestaltet ist, sich um die Bewegungsachse (A) der Sammeleinheit zu verschwenken.

5. Gerät (20) nach einem der vorstehenden Ansprüche, **dadurch gekennzeichnet, dass** die Auslassöffnung (66) der Sammeleinheit (12) mit einem biegsamen Abflussschlauch (70) verbunden ist.

6. Gerät (20) nach einem der vorstehenden Ansprüche, **dadurch gekennzeichnet, dass** es einen Griff (16) zum Bewegen der Sammeleinheit (12) umfasst.

7. Gerät (20) nach einem der vorstehenden Ansprüche, **dadurch gekennzeichnet, dass** die Garwand (36) eine Bodenwand eines Gargefäßes (38) ist, das vorzugsweise ein feststehendes oder nicht neigbares Gargefäß ist.

8. Gerät (20) nach einem der vorstehenden Ansprüche, **dadurch gekennzeichnet, dass** die Ablauföffnung (40) mit einer ringförmigen Dichtung (50) versehen ist, die ein Lagerende umfasst, um an der Umfangskante der Einlassöffnung (65) der Sammeleinheit (12) aufzuliegen.

9. Gerät (20) nach einem der vorstehenden Ansprüche, **dadurch gekennzeichnet, dass** sich die Sammeleinheit (12) unter der Garwand (36) befindet und über Verbindungseinrichtungen (74) mit einem Griff (16) verbunden ist, der sich an der Vorderseite des Gargeräts befindet.

10. Gerät (20) nach Anspruch 9, **dadurch gekennzeichnet, dass** die Verbindungseinrichtungen (74) durch einen Führungsschlitz (60) in einer Stirnwand des Gargeräts verlaufen.

11. Gerät (20) nach Anspruch 10, **dadurch gekennzeichnet, dass** der Schlitz (60) einen in etwa horizontalen, geradlinigen Teil umfasst, der an jedem seiner Enden mit einem in etwa vertikalen Teil verbunden ist.

12. Gerät (20) nach einem der vorstehenden Ansprüche, **dadurch gekennzeichnet, dass** es Umkehreinrichtungen (80) umfasst, die die Sammeleinheit (12) in die erste Position und/oder in die zweite Position schieben.

13. Gerät (20) nach einem der Ansprüche 8 bis 12, **dadurch gekennzeichnet, dass** es mindestens einen herausnehmbaren Tank (30, 32) aufweist, der unter der Garoberfläche (36) angeordnet ist und dazu ausgestaltet ist, abgelassene Produkte aufzunehmen, wenn sich die Sammeleinheit (12) in der zweiten Position befindet.

## Revendications

1. Appareil de cuisson (20), tel qu'une braisière ou une friteuse, ayant au moins une paroi de cuisson (36) ayant un trou de drainage (40) et un dispositif de drainage (10), dans lequel il comprend un collecteur (12) ayant un orifice d'entrée (65) et un orifice de sortie (66) qui sont reliés ensemble par une chambre de collecte (68), et dans lequel le dispositif comprend également un moyen (16, 62, 74) pour déplacer et guider le collecteur, ledit moyen étant conçu pour venir en prise avec ledit appareil afin de permettre au collecteur d'être déplacé, au moins autour d'un axe de déplacement (A) qui est approximativement parallèle à l'axe dudit orifice d'entrée (65), entre au moins une première position dans laquelle son orifice d'entrée (65) communique avec le trou de drainage (40) et une seconde position dans laquelle ces orifices ne communiquent pas l'un avec l'autre.

2. Appareil (20) selon la revendication 1, **caractérisé en ce que** le collecteur (12) a la forme globale d'une boîte.

3. Appareil (20) selon la revendication 1 ou 2, **caractérisé en ce que** le moyen (16, 62, 74) de déplacement et de guidage est conçu pour permettre au collecteur d'être déplacé au moins dans un plan approximativement perpendiculaire à l'axe dudit orifice d'entrée (65).

4. Appareil (20) selon l'une des revendications précédentes, **caractérisé en ce que** le collecteur (12) est porté par un bras (14) dont une extrémité est conçue pour être articulée autour dudit axe (A) de déplacement du collecteur.

5. Appareil (20) selon l'une des revendications précédentes, **caractérisé en ce que** l'orifice de sortie (66) du collecteur (12) est relié à un tuyau de drainage flexible (70).

6. Appareil (20) selon l'une des revendications précédentes, **caractérisé en ce qu'**il comprend une poignée (16) pour déplacer le collecteur (12).

7. Appareil (20) selon l'une des revendications précédentes, **caractérisé en ce que** la paroi de cuisson (36) est une paroi inférieure d'un récipient de cuisson (38), qui est de préférence un récipient de cuisson fixe ou non basculant.

8. Appareil (20) selon l'une des revendications précédentes, **caractérisé en ce qu'**un joint annulaire (50) est monté au niveau du trou de drainage (40) et comprend une extrémité de palier pour reposer contre le bord périphérique de l'orifice d'entrée (65) du collecteur (12) .

9. Appareil (20) selon l'une des revendications précédentes, **caractérisé en ce que** le collecteur (12) est situé sous la paroi de cuisson (36) et est relié par un moyen de liaison (74) à une poignée (16) qui est située à l'avant de l'appareil de cuisson.

10. Appareil (20) selon la revendication 9, **caractérisé en ce que** le moyen de liaison (74) traverse une fente de guidage (60) dans une paroi avant de l'appareil de cuisson.

11. Appareil (20) selon la revendication 10, **caractérisé en ce que** la fente (60) comprend une partie rectiligne sensiblement horizontale reliée à chacune de ses extrémités à une partie sensiblement verticale.

12. Appareil (20) selon l'une des revendications précédentes, **caractérisé en ce qu'**il comprend un moyen de retour (80) qui pousse le collecteur (12) dans ladite première position et/ou dans ladite seconde position.

13. Appareil (20) selon l'une des revendications 8 à 12, **caractérisé en ce qu'**il a au moins un réservoir amovible (30, 32) disposé sous la table de cuisson (36) et conçu pour récupérer les produits drainés lorsque le collecteur (12) est dans ladite seconde position.
